# FASCICULE DE BREVET EUROPEEN

(11) **EP 1 176 324 B1**
(45) Date de publication et mention de la délivrance du brevet: **21.09.2005**
(21) Numéro de dépôt: 01401864.2
(22) Date de dépôt: 11.07.2001
(51) Int. Cl.: F16C 19/52, G01L 5/16

(54) **Ensemble roulement interface comprenant au moins une zone de déformation élastique et ensemble de freinage le comprenant**
Lagerschnittstellenanordnung mit mindestens einer elastischen Verformungszone und Bremsvorrichtung, die diese Anordnung enthält
Interface bearing unit comprising at least an elastic deformation zone and brake device encluding this unit

(30) Priorité: 28.07.2000 FR 0009990
(43) Date de publication de la demande: 30.01.2002
(73) Titulaire: SNR ROULEMENTS, F-74010 Annecy Cedex (FR)
(72) Inventeur: Salou, Arnaud, 74000 Annecy (FR); Nicot, Christophe, 74330 Epagny (FR); Blanchin, Olivier, 74000 Annecy (FR)
(74) Mandataire: Geismar, Thierry

(56) Documents cités:
- EP-A- 0 432 122
- EP-A- 0 788 955
- WO-A-89/12528
- DE-A- 19 538 212
- DE-A- 19 749 092
- DE-C- 4 313 862

## Description

L'invention concerne un ensemble comprenant un roulement et une interface mécanique, un ensemble de freinage comprenant un tel ensemble, ainsi qu'une application de ces ensembles de freinage à la mesure du couple et des forces appliquées à une ou chacune des roues d'un véhicule et à la régulation d'au moins une commande du véhicule.

On connaît déjà des roulements du type comprenant une bague fixe destinée à être associée à une structure fixe, une bague tournante destinée à être associée à un organe tournant, et des corps roulants disposés entre elles.

Lorsque l'on souhaite connaître des efforts appliqués par la structure fixe à l'organe tournant, il est connu de disposer au niveau de la liaison entre la bague fixe et la structure fixe des pièces rapportées formant unités de mesure.

Le document EP-A-0 432 122 illustre cette technologie, en prévoyant une unité de mesure fixée rigidement à la bague fixe, cette unité de mesure comprenant un support annulaire et une pluralité de capteurs associés au support selon des orientations prédéterminées par rapport à l'axe de rotation.

Ce type de technologie présente un certain nombre d'inconvénients.

En effet, la présence et la multiplicité des unités de mesure rapportées rendent le montage du roulement délicat et complexe.

La bague fixe, en emprisonnant les unités de mesure lors du montage du roulement, les soumet à une précontrainte nuisible aux mesures ultérieures des efforts.

Par ailleurs, lorsque l'on souhaite connaître également le couple de freinage appliqué à une roue par l'intermédiaire d'un étrier de frein, ce type de technologie n'est pas envisageable.

L'invention vise donc à remédier à ces inconvénients en proposant un ensemble comprenant un roulement et une interface destinée à être interposée entre la bague fixe du roulement et la structure fixe, ladite interface comprenant de façon intégrée des zones de déformation instrumentées par des capteurs, et qui permette de mesurer à la fois les efforts issus du comportement statique et dynamique du véhicule ainsi que le couple de freinage exercés sur une roue du véhicule.

A cet effet, et selon un premier aspect, l'invention propose un ensemble comprenant :
- un roulement du type comprenant une bague fixe destinée à être associée à une structure fixe, une bague tournante destinée à être associée à un organe tournant, et des corps roulants entre elles ; et
- une interface mécanique associée par l'intermédiaire de moyens d'association à ladite bague fixe, cette interface étant destinée à être interposée entre la bague fixe du roulement et la structure fixe, ladite interface comprenant :
   - des premiers moyens de fixation à la structure fixe ;
   - des deuxièmes moyens de fixation d'un dispositif destiné à appliquer un effort sur l'organe tournant ; et
   - au moins une zone de déformation élastique apte à être déformée sous l'action d'efforts exercés sur ledit ensemble, au moins un capteur apte à mesurer les dits efforts étant associé fonctionnellement à ladite zone de déformation élastique.

Selon une réalisation, l'interface comprend deux faces planes s'étendant radialement et reliées entre elles par une face circonférentielle, un alésage de diamètre sensiblement supérieur au diamètre extérieur de la bague fixe étant pratiqué dans ladite interface.

L'interface peut alors comprendre des premières saillies radiales dans lesquelles sont pratiqués des trous axiaux pour la fixation de l'ensemble par vissage sur la structure fixe, deux saillies adjacentes étant séparées par une zone de moindre dimension axiale et/ou radiale formant zone de déformation élastique, sur laquelle sont disposés le ou les capteurs.

Selon une réalisation, l'interface comprend quatre premières saillies disposées sensiblement à 90° les unes par rapport aux autres, définissant entre elles quatre zones de déformation élastique sur chacune desquelles est disposé au moins un capteur.

L'interface peut comprendre des deuxièmes saillies radiales formant deuxièmes moyens de fixation au roulement du dispositif destiné à appliquer un effort sur une partie tournante associée à la bague tournante, les saillies comprenant une zone de base et une zone d'extrémité.

Selon une réalisation, les deuxièmes saillies comprennent des trous axiaux pour la fixation par vissage du dit dispositif, localisés dans la zone d'extrémité, au moins un capteur étant disposé sur ou au voisinage de la zone de base, celle-ci formant zone de déformation élastique.

Deux capteurs peuvent alors être disposés sur la face circonférentielle, de part et d'autre de chaque deuxième saillie et/ou au moins un capteur peut être disposé sur l'une des faces planes.

Une dimension radiale des deuxièmes saillies peut être supérieure à une dimension radiale des premières saillies.

Selon une réalisation, l'interface comprend :
- quatre premières saillies disposées sensiblement à 90° les unes par rapport aux autres, définissant entre elles trois zones de déformation élastique sur chacune desquelles est disposé au moins un capteur ; et
- deux deuxièmes saillies localisées entre deux premières saillies adjacentes, chaque deuxième saillie étant pourvue d'au moins un capteur.

En variante, des ajours sont pratiqués dans les premières et/ou les deuxièmes saillies, des capteurs étant disposés sur les faces internes des ajours.

Selon un premier mode de réalisation, les premiers moyens de fixation forment également moyens d'association de l'interface à la bague fixe du roulement.

En variante, la bague fixe comprend une bride comprenant des saillies radiales dans lesquelles sont pratiqués des trous axiaux disposés en regard de ceux des premiers moyens de fixation de sorte à assurer la fixation de l'interface par vissage sur le roulement.

Selon un deuxième mode de réalisation, les moyens d'association de l'interface sur le roulement sont distincts des premiers et des deuxièmes moyens de fixation.

En variante, la bague fixe comprend une bride radiale, des trous axiaux étant pratiqués en regard dans ladite bride et dans l'interface de sorte à assurer leur association par vissage.

Selon une réalisation, la ou les zones de déformation élastique sont localisées au voisinage des premiers et/ou des deuxièmes moyens de fixation et/ou au voisinage des moyens d'association, le ou les capteurs localisés au voisinage des premiers moyens de fixation et/ou au voisinage des moyens d'association sont alors agencés pour mesurer les forces appliquées aux premiers moyens de fixation et/ou transmis à la bague fixe, ainsi que leurs moments respectifs, selon trois directions orthogonales formant ensemble un trièdre.

En variante, le ou les capteurs localisés au voisinage des deuxièmes moyens de fixation sont agencés pour mesurer les forces appliquées aux deuxièmes moyens de fixation, ainsi que leurs moments respectifs, selon trois directions orthogonales formant ensemble un trièdre.

Les capteurs peuvent être ou comprendre :
- des jauges de contraintes à base d'éléments piézorésistifs ;
- des capteurs d'ondes acoustiques de surface ;
- des capteurs de champ magnétique.

Selon une réalisation, au moins un capteur est disposé sur une pièce intermédiaire fixée sur une zone de déformation élastique par encastrement, soudage, collage, ou analogue.

Selon un deuxième aspect, l'invention concerne un ensemble de freinage comprenant un ensemble tel que décrit ci-dessus et un étrier de frein associé à l'interface mécanique par l'intermédiaire des deuxièmes moyens de fixation, le dit étrier étant dissocié de la structure fixe.

L'ensemble de freinage peut comprendre en outre un disque de frein associé à la bague tournante, inséré entre les mors de l'étrier pour que celui-ci lui applique un effort de freinage par rapprochement des mors.

Selon un troisième aspect, l'invention concerne une application de tels ensembles à la mesure d'une part du couple de freinage d'un véhicule et d'autre part des efforts longitudinaux, transversaux et verticaux exercés sur une ou chacune de ses roues, dans laquelle un ensemble est associé à une ou chacune des roues, le couple étant mesuré au moyen des capteurs localisés au voisinage des deuxièmes moyens de fixation et/ou au voisinage des moyens d'association et les efforts au moyen des capteurs localisés au voisinage des premiers moyens de fixation.

Selon une réalisation, un dispositif de commande recueille les mesures du couple de freinage et/ou des efforts exercés sur les roues, ce dispositif étant agencé pour réguler au moins une commande dynamique du véhicule, notamment le freinage, l'accélération, la direction, la suspension en fonction des dites mesures.

D'autres objets et avantages de l'invention apparaîtront au cours de la description qui suit, faite en référence aux dessins annexés, dans lesquels :
- la figure 1 est une vue en perspective d'un ensemble comprenant un roulement et une interface selon l'invention, la bague intérieure tournante étant emmanchée sur un moyeu de roue ; selon le mode de réalisation illustré, l'interface comprend plusieurs zones de déformation élastique aptes à être déformée sous l'action d'efforts exercés sur le roulement, et des capteurs aptes à mesurer ces efforts sont associés à ces zones de déformation ; le moyeu comprenant un flasque sur lequel un disque de frein d'un véhicule automobile est destiné à être associé ;
- la figure 2 est une vue en perspective du roulement représenté sur la figure 1, selon un autre angle de vue ;
- la figure 3 est une vue en perspective de l'interface des figures précédentes qui montre les premiers et les deuxièmes moyens de fixation, les premiers moyens de fixation formant également moyens d'association avec la bague fixe ; l'interface présente des zones de déformation élastique sur lesquelles sont disposés des capteurs pour la mesure des déformations induites par les efforts subis par le roulement.
- la figure 4 est une vue en perspective d'un ensemble analogue à celui des figures 1 et 2, dans lequel des ajours sont formés au voisinage des deuxièmes moyens de fixation de sorte à augmenter l'amplitude des déformations élastiques engendrées par les efforts ;
- la figure 5 est une vue en perspective d'un ensemble selon un deuxième mode de réalisation, dans lequel les premiers moyens de fixation sont distincts des moyens d'association ; selon le mode de réalisation illustré, des ajours étant formés au voisinage des deuxièmes moyens de fixation de sorte à augmenter l'amplitude des déformations élastiques engendrées par les efforts ;
- la figure 6 est une vue en perspective d'un ensemble analogue à celui de la figure 5, dans lequel des ajours sont également formés au voisinage des premiers moyens de fixation de sorte à augmenter l'amplitude des déformations élastiques engendrées par les efforts ;
- la figure 7 est une vue en perspective d'un ensemble analogue à celui de la figure 6, dans lequel la forme des ajours prévus au voisinage des premiers moyens de fixation est différente ;
- la figure 8 est une vue en perspective d'un ensemble analogue à celui de la figure 5, dans lequel des ajours doubles sont prévus au voisinage des premiers moyens de fixation ;
- la figure 9 est une vue en perspective d'un ensemble de freinage comprenant un ensemble tel que celui de la figure 8, un étrier de frein associé à l'interface et un disque de frein associé à la bague tournante ;
- la figure 10 est une vue éclatée de l'ensemble de freinage représenté sur la figure 9 sur laquelle le moyeu et la bague intérieure comprennent chacun une piste de roulement des corps roulant ; sur cette figure, les corps roulants, les cages, les joints et les capteurs ne sont pas représentés ;
- la figure 11 est une vue en plan de dessus d'un capteur dont est pourvue l'interface des figures précédentes, selon un mode de réalisation où il comprend sur sa face supérieure quatre jauges de contraintes extensométriques montées en pont qui sont collées sur un substrat, permettant de mesurer les déformations de flexion et de torsion subies par le substrat ;
- la figure 12 est une vue de côté du capteur de la figure 10, qui comprend sur sa face latérale deux capteurs extensométriques permettant de mesurer d'autres déformations de flexion subies par le substrat ; et
- la figure 13 est un schéma illustrant une application de l'ensemble de la figure 9 à la mesure du couple de freinage du véhicule ; sur cette figure, un dispositif de commande recueille les mesures du couple de freinage et/ou des efforts exercés sur les roues ; ce dispositif est relié à quatre unités de commande du véhicule pour réguler le freinage, l'accélération, la direction, la suspension en fonction des mesures recueillies.

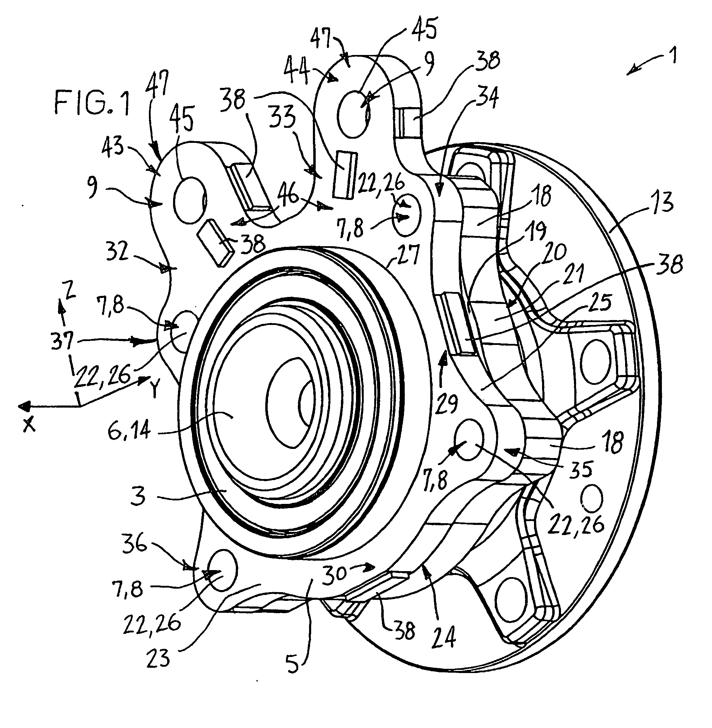

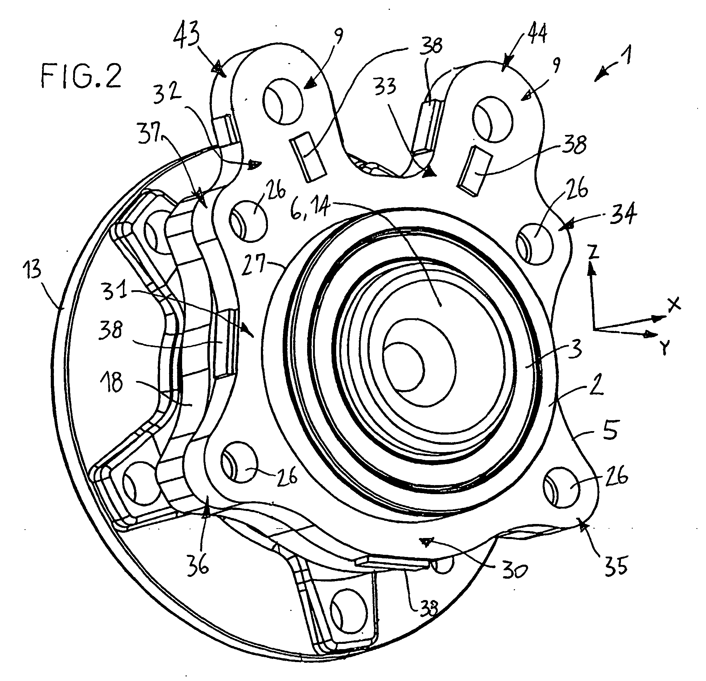

Sur les figures 1 à 10 est représenté un roulement 1 qui comprend une bague extérieure fixe 2 et une bague intérieure tournante 3, et des corps roulants entre elles (non représentés sur les figures).

La bague fixe 2 est destinée à être associée à une structure fixe telle que le châssis d'un véhicule 4 par l'intermédiaire d'une interface 5, tandis que la bague tournante 3 est destinée à être associé à un organe tournant 6.

A cet effet, l'interface 5 comprend d'une part des moyens d'association 7 de l'interface 5 à la bague fixe 2 et d'autre part des premiers moyens de fixation 8 de l'interface 5 à la structure fixe.

En outre l'interface 5 comprend des deuxièmes moyens de fixation 9 d'un dispositif 10 destiné à appliquer un effort sur l'organe tournant 6.

Une fois associés, le roulement 1 et l'interface 5 forme un ensemble qui est destiné d'une part à être associé à une structure fixe par l'intermédiaire des premiers moyens de fixation 8 et d'autre part à associer le dispositif 10 par l'intermédiaire des deuxièmes moyens de fixation 9.

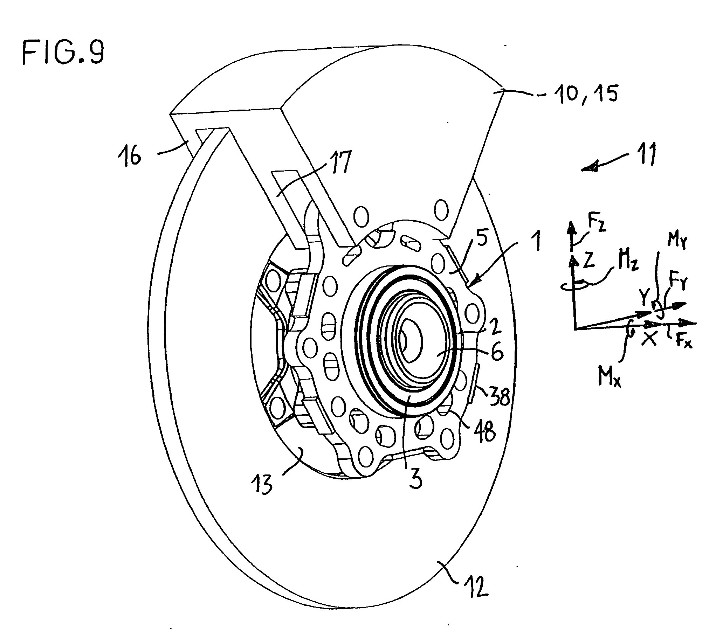

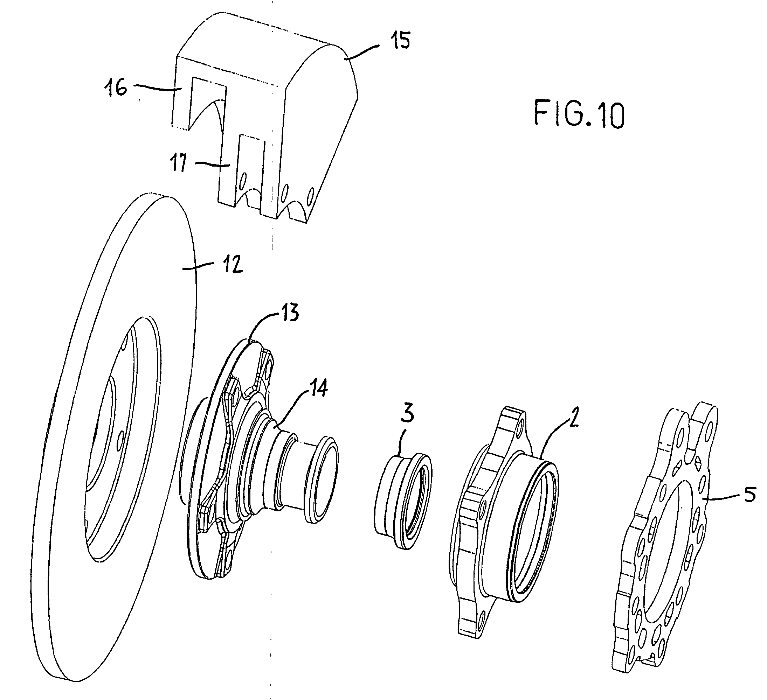

Dans une application illustrée sur les figures 9 et 10, l'ensemble 1 est intégré à un ensemble de freinage 11 qui comprend un disque de frein 12 monté sur un flasque 13 du moyeu 14, et un étrier 15 comportant deux mors 16, 17 disposés de part et d'autre du disque 12 pour exercer sur lui une force de freinage F par pincement du disque 12 lors du rapprochement des mors 16, 17.

Dans une première variante représentée sur les figures 1 à 8, la bague tournante 3 est emmanchée sur le moyeu 14 qui s'étant de façon coaxiale au disque 12, le disque 12 et le moyeu 14 faisant partie de l'organe tournant 6 mentionné ci-dessus.

Dans une deuxième variante représentée sur les figures 9 et 10, le moyeu 14 comprend au moins l'une des pistes de roulement des corps roulants de sorte à faire partie de la bague tournante 3. Dans cette variante, le moyeu 14 est par exemple serti sur la bague fixe 2 et l'organe tournant 6 comprend le disque 12 monté sur le flasque 13.

Trois directions arbitraires représentées sur les figures 1 à 9 sont définies en relation avec l'ensemble de freinage 11 pour faciliter la présente description : une direction X axiale, dite longitudinale, confondue avec l'axe du roulement 1, l'axe du disque 12 et l'axe du moyeu 14; et deux directions radiales perpendiculaires à la direction axiale et perpendiculaires entre elles : une direction Y dite transversale et une direction Z dite d'élévation, de sorte que les trois directions X, Y, Z forment dans l'espace un trièdre direct.

L'on suppose pour plus de commodité que, dans le cas de l'ensemble de freinage 11, la direction d'élévation Z est perpendiculaire au sol, tandis que les directions longitudinale X et transversale Y sont parallèles au sol.

Une localisation à proximité de l'axe du roulement 1 est dite intérieure, tandis qu'une localisation à distance de l'axe est dite extérieure.

Des efforts sont appliqués par la structure fixe sur les premiers moyens de fixation 8 ou réciproquement, notamment lors des mouvements (tangage, roulis, lacet) du châssis du véhicule 4 par rapport à ses trains roulants, dus à l'accélération, aux virages, aux mouvements de suspension, au freinage.

Ces efforts se traduisent par des forces selon les trois directions X, Y, Z, et des moments autour d'axes parallèles à ces trois directions.

L'on souhaite mesurer au moins une partie de ces efforts.

Dans les modes de réalisation représentés, la bague fixe comprend une bride 18 venue de matière et étendue radialement sur au moins une partie de la circonférence du roulement 1.

Cette bride 18 présente deux faces 19, 20 qui s'étendent radialement selon un plan d'élévation transversale, reliées par une face circonférentielle 21, et est percée de trous traversants 22 pour l'association de la bague fixe 2 à l'interface 5 par vissage.

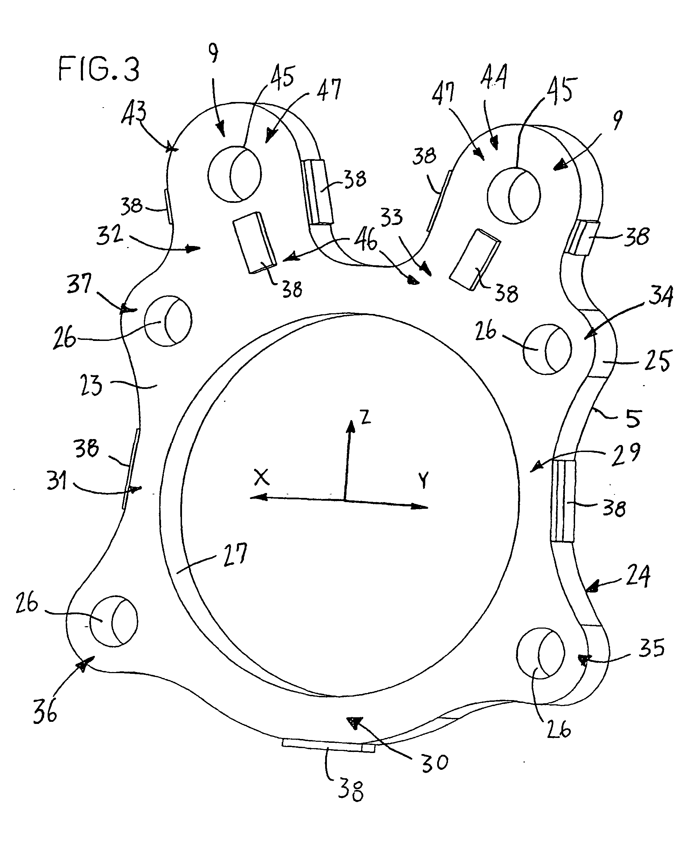

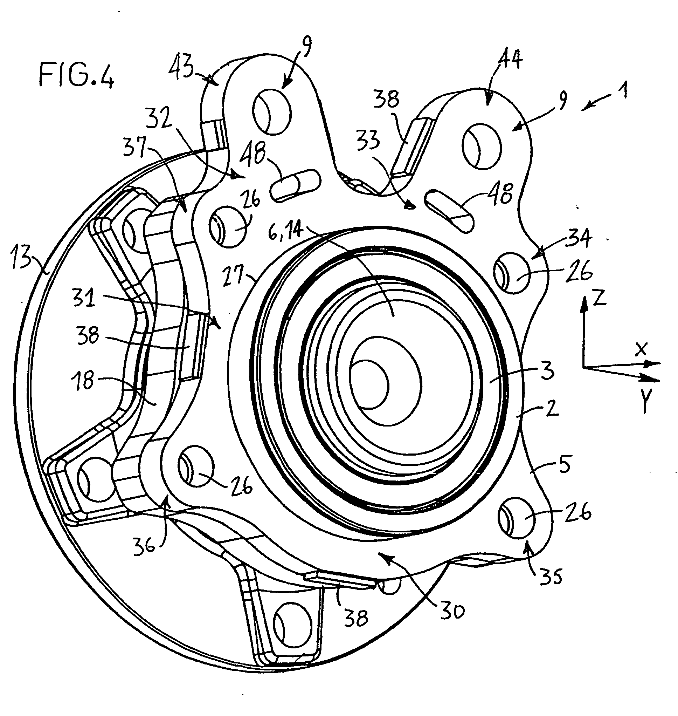

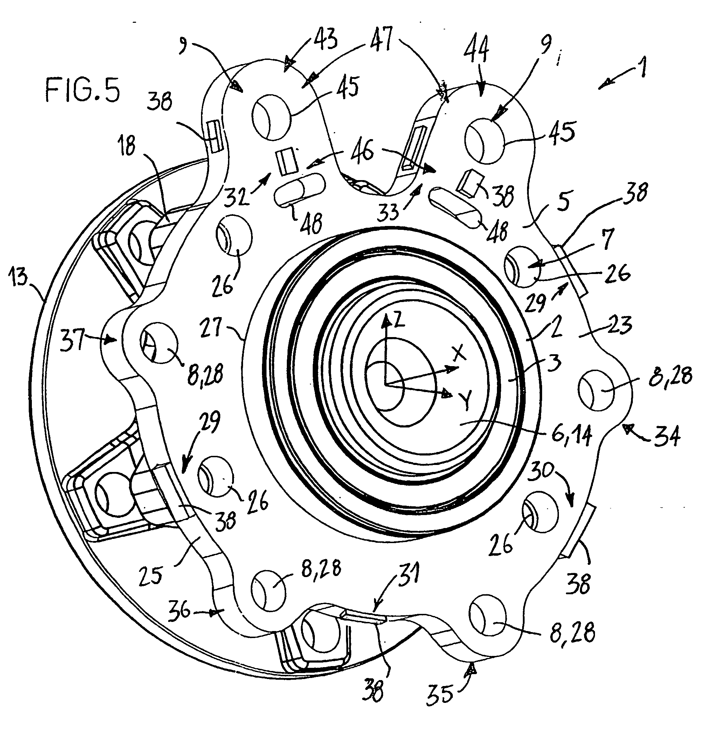

Comme représenté notamment sur la figure 3, l'interface 5 présente deux faces 23, 24 qui s'étendent radialement selon un plan d'élévation transversale et reliées par une face circonférentielle 25.

Des trous traversants 26 sont pratiquées dans l'interface 5 de sorte qu'ils soient disposé en regard des trous 22 de la bride 18 pour pouvoir assurer l'association de l'interface 5 à la bague fixe 2 par vissage.

L'interface 5 présente également un alésage 27 de diamètre sensiblement supérieur au diamètre extérieur de la bague fixe 2 de sorte à pouvoir venir s'emboîter sur celle-ci.

Lors de l'association, l'interface 5 est d'abord emboîtée sur la bague fixe 2 avec les trous 22, 26 en regard les uns des autres et avec les faces 24, 20 accolées, puis l'association est réalisée par vissage de sorte à obtenir un ensemble suivant l'invention.

Selon un premier mode de réalisation représenté sur les figures 1 à 4, les trous 26 servent également de premiers moyens de fixation 8 de l'ensemble à la structure fixe.

A cet effet, l'association de l'ensemble est alors réalisée en même temps que sa fixation sur la structure fixe, au moyen d'un vissage à travers d'une part les trous 22, 26 et d'autre part un trou prévu dans la structure fixe.

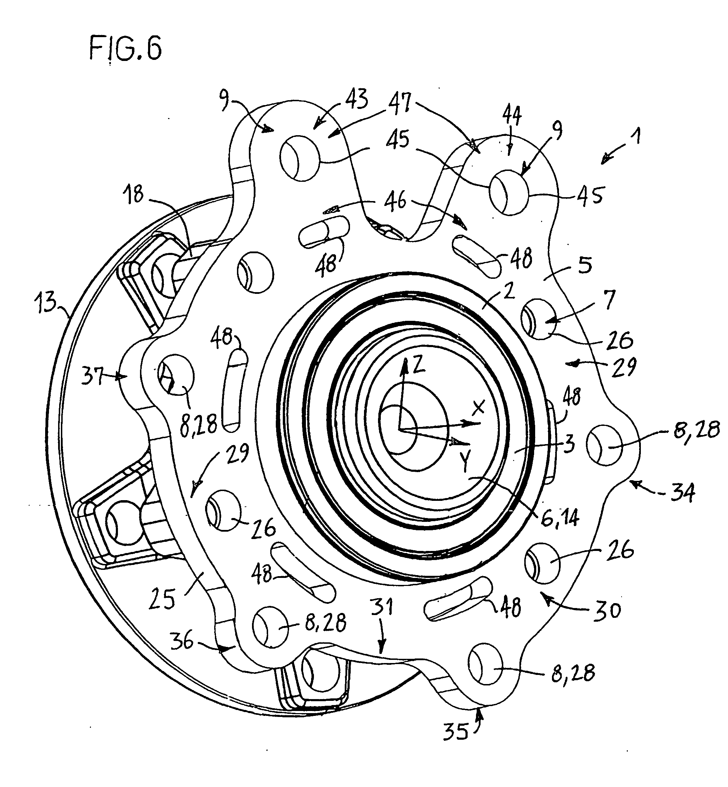

Selon un deuxième mode de réalisation représenté sur les figures 5 à 10, des trous supplémentaires 28 sont pratiqués dans l'interface 5 de sorte à pouvoir associer l'ensemble préalablement assembler à la structure fixe par vissage.

Etant associé d'une part à la structure fixe par l'intermédiaire de l'interface 5 et d'autre part à l'organe tournant 6 par l'intermédiaire de la bague tournante 3, l'ensemble subit et transmet les efforts au moins en partie, et constitue de ce fait un lieu privilégié de mesure.

Suivant l'invention, la mesure de ces efforts est réalisée sur l'interface.

A cet effet, l'interface 5 présente au moins une zone de déformation élastique 29-33 déformable sous l'action d'efforts exercés sur l'ensemble.

Le matériau dans lequel est réalisée l'interface 1 ainsi que la forme des zones de déformation 29-33, sont choisis pour que les déformations ne dépassent pas la limite élastique du matériau.

Par ailleurs, l'interface 5 étant associée lors des mesures à la bague fixe 2, le matériau ainsi que la forme de la bride 18 sont choisis pour permettre les déformations des zones 29-33 dans la limite élastique.

Selon un exemple de réalisation, le matériau dans lequel est réalisée l'interface 5 et le roulement 1 est un acier classiquement utilisé dans le domaine des roulements.

Selon un autre exemple de réalisation, l'interface 5 peut servir de protection contre la corrosion galvanique entre la structure fixe et la bague fixe 2 du roulement 1.

A cet effet, soit la nature du matériau formant l'interface 5 permet cette protection soit l'interface 5 est revêtue, au moins sur les zones en contact, d'un revêtement adéquat.

Selon un troisième exemple de réalisation, l'interface 5 peut être réalisée en alliage léger de sorte à diminuer la masse embarquée.

Selon le premier mode de réalisation représenté sur les figures 1 à 4, l'interface 5 comprend quatre premières saillies radiales 34-37 dans lesquelles sont prévus les trous 26, et formant les premiers moyens de fixation 8 et les moyens d'association 7 mentionnés ci-dessus.

Selon le deuxième mode de réalisation représenté sur les figures 5 à 10, l'interface 5 comprend quatre premières saillies radiales 34-37 dans lesquelles sont prévus les trous 26 qui forment les premiers moyens de fixation 8, et quatre trous 28 formant les moyens d'association 7.

L'interface 5 présente une épaisseur (c'est-à-dire la distance séparant ses deux faces 23, 24, ou la dimension transversale de sa face circonférentielle) suffisante pour à la fois assurer une fixation rigide du roulement 1 à la structure fixe et permettre une déformation des zones 29-33 sous l'effet des efforts subis.

Selon un mode de réalisation illustré sur les figures 1 à 10, la bride comprend des zones en creux 29-33, dont les dimensions radiales et/ou axiales sont inférieures aux dimensions radiales, respectivement axiales des premières saillies 34-37.

Selon un mode de réalisation (figures 1 à 4), les premières saillies radiales 34-37 sont disposées à 90° les unes par rapport aux autres, les zones en creux 29-33 étant intercalées entre les premières saillies 34-37.

Ces zones en creux, qui visent à faciliter les déformations locales de l'interface 5, forment les zones de déformation 29-33 mentionnées ci-dessus.

Afin de permettre la mesure de ces déformations, et par conséquent des efforts subis par le roulement 1, au moins un capteur 38 est associé fonctionnellement à au moins une, et par exemple à chaque zone de déformation élastique 29-33.

Par exemple, chaque capteur 38 peut être élaboré à partir d'éléments choisis parmi :
- les jauges de contraintes à base d'éléments piézorésistifs ;
- les capteurs d'ondes acoustiques de surface ;
- les capteurs de champ magnétique, par exemple basés sur des éléments sensibles de type magnétorésistance, magnétorésistance géante, effet Hall, magnétorésistance à effet tunnel.

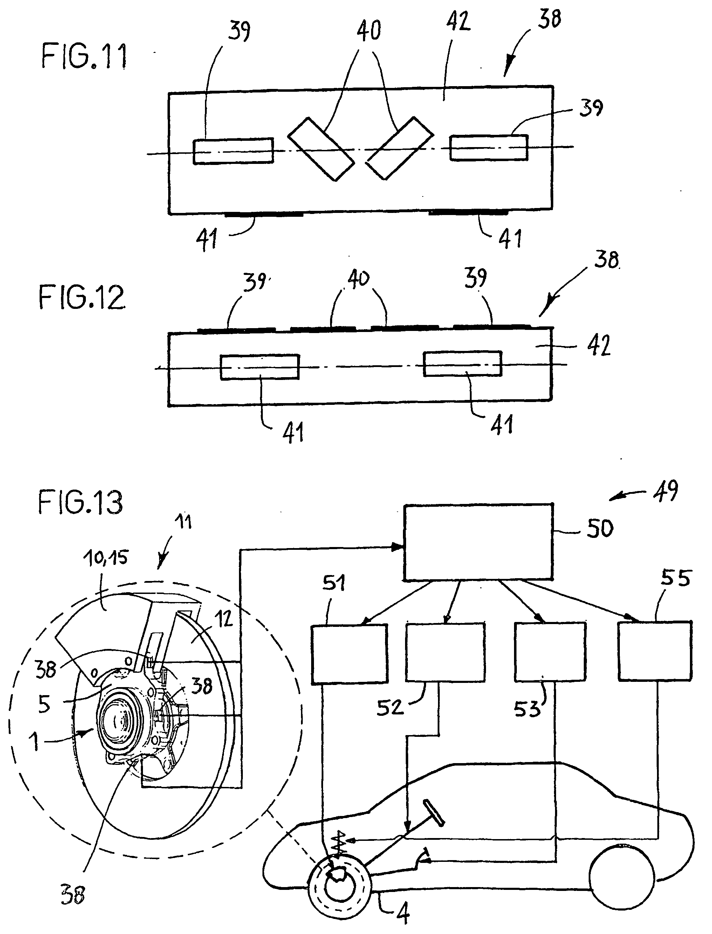

Selon un mode de réalisation illustré sur les figures 11 et 12, qui illustrent un capteur 38 en gros plan, celui-ci est élaboré à partir de jauges de contrainte extensométriques 39-41 dont la valeur ohmique varie linéairement en fonction de l'élongation.

Le capteur 38 comprend par exemple un substrat diélectrique formant une plaquette 42 sur laquelle les jauges 39-41 sont collées ou formées par sérigraphie ou procédé équivalent.

Par exemple, deux jauges de flexion 39 et deux jauges de torsion 40 sont disposées sur une même face supérieure de la plaquette, tandis que deux jauges de flexion 41 sont disposées sur une même face latérale de la plaquette 42.

Ces jauges de contraintes sont parcourues par un courant et insérées par exemple dans un circuit à pont de Wheatstone sous basse tension, et permettant de mesurer la valeur ohmique de chacune des jauges de contrainte.

On peut en déduire les déformations subies par la plaquette 42 en torsion d'une part, et en flexion selon deux directions perpendiculaires d'autre part.

La plaquette 42 étant rigidement fixée à la bride sur une zone de déformation 29-33, par exemple par collage ou soudage, il est possible d'en déduire les déformations de la zone de déformation 29-33, et par conséquent les contraintes qu'elle subit.

Les capteurs 38 peuvent être disposés sur les faces transversales 23, 24 de l'interface 5 et/ou sur sa face circonférentielle 25 au voisinage ou sur une zone de déformation 29-33, les premières saillies 34-37 étant rigidement fixées à la structure fixe.

En outre, l'interface 5 comprend, selon un mode de réalisation illustré sur les figures 1 à 10, des deuxièmes moyens de fixation 9 de l'étrier de frein 15 à l'interface 5.

Selon des variantes de réalisation, non représentées, ces deuxièmes moyens de fixation 9 associent un autre type de dispositif destiné à appliquer un effort sur l'organe tournant 6.

Selon un mode de réalisation, l'interface 5 comprend au moins une, et par exemple deux deuxièmes saillies radiales 43, 44 comprenant des trous traversants 45 pour la fixation de l'étrier 15 par vissage, et formant les deuxièmes moyens de fixation 9.

Les deuxièmes saillies 43, 44 comprennent, depuis l'intérieur vers l'extérieur, une zone de base 46 et une zone d'extrémité 47 dans laquelle sont pratiqués les trous 45.

Selon un mode de réalisation illustré sur les figures 1 à 10, les deux deuxièmes saillies 43, 44 sont interposées entre deux premières saillies 34, 35 consécutives, de sorte que l'interface 5 présente un plan de symétrie d'élévation longitudinale, et la dimension radiale des deuxièmes saillies 43, 44 est supérieure à la dimension radiale des premières saillies 34-37.

Selon les modes de réalisation représentés, les premières 34-37 et deuxièmes 43, 44 saillies sont disposées dans un même plan, mais elles peuvent également être disposées dans deux plans coplanaires ou non.

Les deuxièmes saillies 43, 44 formant l'unique support de l'étrier de frein 15, celui-ci étant dissocié du châssis du véhicule, l'ensemble des forces et du couple de freinage appliqué par ce dernier au disque 12 est transmis à l'interface 5 par l'intermédiaire des deuxièmes saillies 43, 44.

L'on souhaite mesurer ces forces, leur moments selon les trois directions X, Y, Z, de sorte à en déduire notamment le couple de freinage.

A cet effet, les deuxièmes saillies 43, 44 comprennent chacune au moins une zone de déformation élastique sur laquelle - ou au voisinage de laquelle - est disposé un capteur 38 tel que décrit plus haut, apte à mesurer la déformation qu'elle subit lors du freinage, selon les trois directions X, Y, Z.

Cette zone de déformation élastique est par exemple confondue avec la zone de base 46 des deuxièmes saillies 43, 44.

Selon un mode de réalisation, deux capteurs 38 sont disposés sur la face circonférentielle 25 de l'interface 5, de part et d'autre et à la base de chaque deuxième saillie 43, 44.

Un capteur 38 peut être disposé à la base de chaque saillie 43, 44, sur l'une des faces 23, 24 transversales de l'interface 5, ou sur chacune d'elle.

Afin d'améliorer la précision des mesures, il est possible de combiner la disposition des capteurs 38 sur la face circonférentielle 25 et sur les faces transversales 23, 24 de l'interface 5.

En variante, représentée sur la figure 4, un ajour 48 est pratiqué dans chaque partie de base 46 des deuxièmes saillies 43, 44. Ces ajours 48 sont formés par un trou oblong traversant et ont pour fonction d'augmenter l'amplitude des déformations élastiques engendrées par les efforts de sorte à améliorer les mesures.

En complément, au moins un capteur 38 peut être disposé sur une face interne 54 de l'ajour 48 de sorte à former zone de déformation instrumentée.

Dans une variante, représentée sur la figure 6, des ajours 48 sont également pratiqués au voisinage des trous 28.

L'ajustage du nombre et de la forme des ajours 48 peut être réalisé par l'homme du métier en fonction de l'amplitude des déformations élastiques détectable par les capteurs 38.

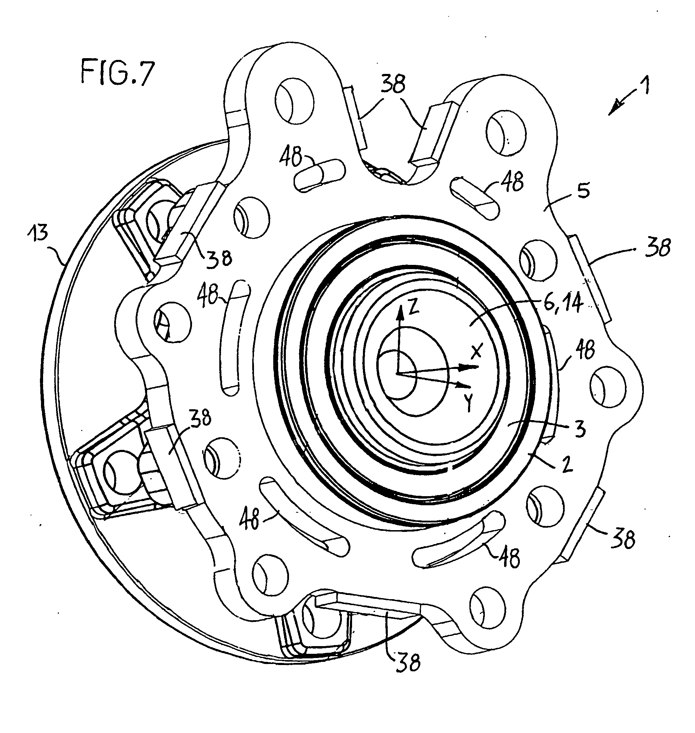

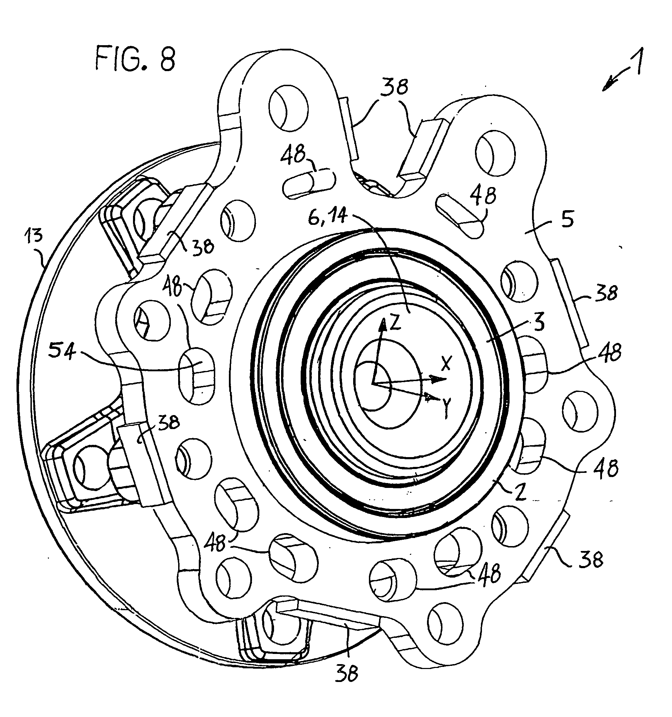

A titre d'exemple, deux réalisations complémentaires sont représentées sur les figures 7 et 8.

Selon un mode de réalisation, illustré sur la figure 13, les informations issues de la mesure par les capteurs 38 des déformations d'interface 5, d'une part au voisinage des premiers moyens de fixation 8 et d'autre part au voisinage des deuxièmes moyens de fixation 9, sont recueillies par un dispositif de commande 49.

Ce dispositif de commande 49 comprend par exemple un calculateur 50 relié aux capteurs 38, qui calcule les contraintes subies par l'interface 5 au niveau des capteurs, en déduit les résultantes Fx, Fy, Fz des forces subies par l'interface 5, respectivement selon les directions X, Y, Z ainsi que leurs moments Mx, My, Mz selon ces directions.

De la sorte, le calculateur calcule notamment le couple de freinage appliqué par l'étrier 15 au disque 12.

En variante, un ensemble 1 est associé à chaque roue du véhicule de sorte que le calculateur 50 permette la mesure du couple de freinage et/ou des efforts subis sur chaque roue.

Selon un mode de réalisation, illustré sur la figure 13, le dispositif de commande 49 comprend en outre quatre servomoteurs 51-53, 55 reliés d'une part au calculateur 50, et d'autre part respectivement au système de freinage, au système de direction, au système d'accélération du véhicule, pour réguler respectivement le freinage, la direction, l'accélération, la suspension de celui-ci en fonction des valeurs des forces Fx, Fy, Fz, des moments Mx, My, Mz calculés par le calculateur.

En variante, le roulement 1 peut être instrumenté par un codeur magnétique associé à la bague tournante 3 ou formant joint d'étanchéité et un capteur associé à la bague fixe 2 de sorte à mesurer la vitesse de rotation de l'organe tournant.

Dans cette variante, la vitesse de rotation peut être implémentée dans le dispositif de commande 49 de sorte à pouvoir être utilisée lors de la régulation des commandes du véhicule.

## Revendications

1. Ensemble comprenant :
- un roulement (1) du type comprenant une bague fixe (2) destinée à être associée à une structure fixe, une bague tournante (3) destinée à être associée à un organe tournant (6), et des corps roulants entre elles ; et
- une interface mécanique (5) associée par l'intermédiaire de moyens d'association (7) à ladite bague fixe (2), cette interface (5) étant destinée à être interposée entre la bague fixe (2) du roulement (1) et la structure fixe, ladite interface (5) comprenant :
- des premiers moyens de fixation (8) à la structure fixe ;
- des deuxièmes moyens de fixation (9) d'un dispositif (10) destiné à appliquer un effort sur l'organe tournant (6) ; et
- au moins une zone de déformation élastique (29-33) apte à être déformée sous l'action d'efforts exercés sur ledit ensemble, au moins un capteur (38) apte à mesurer les dits efforts étant associé fonctionnellement à ladite zone de déformation élastique (29-33).

2. Ensemble selon la revendication 1, **caractérisé en ce que** l'interface (5) comprend deux faces planes (23, 24) s'étendant radialement et reliées entre elles par une face circonférentielle (25), un alésage (27) de diamètre sensiblement supérieur au diamètre extérieur de la bague fixe (2) étant pratiqué dans ladite interface (5).

3. Ensemble selon la revendication 2, **caractérisé en ce que** la dite interface (5) comprend des premières saillies radiales (34-37) dans lesquelles sont pratiqués des trous axiaux (26) pour la fixation de l'ensemble par vissage sur la structure fixe, deux saillies adjacentes étant séparées par une zone de moindre dimension axiale et/ou radiale formant zone de déformation élastique (29-33), sur laquelle sont disposés le ou les capteurs (38).

4. Ensemble selon la revendication 3, **caractérisé en ce que** la dite interface (5) comprend quatre premières saillies (34-37) disposées sensiblement à 90° les unes par rapport aux autres, définissant entre elles quatre zones de déformation élastique (29-31) sur chacune desquelles est disposé au moins un capteur (38).

5. Ensemble selon l'une des revendications 2 à 4, **caractérisé en ce que** l'interface (5) comprend des deuxièmes saillies radiales (43, 44) formant deuxièmes moyens de fixation (9) au roulement du dispositif (10) destiné à appliquer un effort sur l'organe tournant (6) associée à la bague tournante (3), les saillies (43, 44) comprenant chacune une zone de base (46) et une zone d'extrémité (47).

6. Ensemble selon la revendication 5, **caractérisé en ce que** les dites deuxièmes saillies (43, 44) comprennent des trous axiaux (45) pour la fixation par vissage du dispositif (10), localisés dans la zone d'extrémité (47), au moins un capteur (38) étant disposé sur ou au voisinage de la zone de base (46), celle-ci formant zone de déformation élastique (32, 33).

7. Ensemble selon la revendication 6, **caractérisé en ce que** deux capteurs (38) sont disposés sur la face circonférentielle (25), de part et d'autre de chaque deuxième saillie (43, 44).

8. Ensemble selon la revendication 6 ou 7, **caractérisé en ce qu'**au moins un capteur (38) est disposé sur l'une des faces planes (23, 24).

9. Ensemble selon l'une des revendications 5 à 8, **caractérisé en ce que** une dimension radiale des deuxièmes saillies (43, 44) est supérieure à une dimension radiale des premières saillies (34-37).

10. Ensemble selon l'une des revendications 5 à 9, **caractérisé en ce que** l'interface (5) comprend :
- quatre premières saillies (34-37) disposées sensiblement à 90° les unes par rapport aux autres, définissant entre elles trois zones de déformation élastique (29-31) sur chacune desquelles est disposé au moins un capteur (38) ; et
- deux deuxièmes saillies (43, 44) localisées entre deux premières saillies adjacentes (37, 34), chaque deuxième saillie (43, 44) étant pourvue d'au moins un capteur (38).

11. Ensemble selon l'une des revendications 5 à 10, **caractérisé en ce que** des ajours (48) sont pratiqués dans les premières (34-37) et/ou les deuxièmes (43, 44) saillies, des capteurs (38) étant disposés sur les faces internes (54) des ajours (48).

12. Ensemble selon l'une quelconque des revendications 1 à 11, **caractérisé en ce que** les premiers moyens de fixation (8) forment également moyens d'association (7) de l'interface (5) à la bague fixe (2) du roulement (1).

13. Ensemble selon la revendication 12, **caractérisé en ce que** la bague fixe (2) comprend une bride (18) comprenant des saillies radiales dans lesquelles sont pratiqués des trous axiaux (22) disposés en regard de ceux (28) des premiers moyens de fixation (8) de sorte à assurer la fixation de l'interface (5) par vissage sur le roulement (1).

14. Ensemble selon l'une quelconque des revendications 1 à 11, **caractérisé en ce que** les moyens d'association (7) de l'interface (5) sur le roulement sont distincts des premiers (8) et des deuxièmes (9) moyens de fixation.

15. Ensemble selon la revendication 14, **caractérisé en ce que** la bague fixe (2) comprend une bride radiale (18), des trous axiaux (26) étant pratiqués en regard dans ladite bride (18) et dans l'interface (5) de sorte à assurer leur association par vissage.

16. Ensemble selon l'une des revendications 1 à 15, **caractérisé en ce que** la ou les zones de déformation élastique (29-33) sont localisées au voisinage des premiers (8) et/ou des deuxièmes (9) moyens de fixation et/ou au voisinage des moyens d'association (7).

17. Ensemble selon la revendication 16, **caractérisé en ce que** le ou les capteurs (38) localisés au voisinage des premiers moyens de fixation (8) et/ou au voisinage des moyens d'association (7) sont agencés pour mesurer les forces appliquées aux premiers moyens de fixation (8) et/ou transmis à la bague fixe (2), ainsi que leurs moments respectifs, selon trois directions orthogonales formant ensemble un trièdre.

18. Ensemble selon la revendication 16 ou 17, **caractérisé en ce que** le ou les capteurs (38) localisés au voisinage des deuxièmes moyens de fixation (9) sont agencés pour mesurer les forces appliquées aux deuxièmes moyens de fixation (9), ainsi que leurs moments respectifs, selon trois directions orthogonales formant ensemble un trièdre.

19. Ensemble selon l'une des revendications 1 à 18, **caractérisé en ce que** les capteurs (38) sont ou comprennent des jauges de contraintes à base d'éléments piézorésistifs.

20. Ensemble selon l'une des revendications 1 à 18, **caractérisé en ce que** les capteurs (38) sont ou comprennent des capteurs d'ondes acoustiques de surface.

21. Ensemble selon la revendication 1 à 18, **caractérisé en ce que** les capteurs (38) sont ou comprennent des capteurs de champ magnétique.

22. Ensemble selon l'une des revendications 1 à 21, **caractérisé en ce qu'**au moins un capteur (38) est disposé sur une pièce intermédiaire (42) fixée sur une zone de déformation élastique (29-33) par encastrement, soudage, collage, ou analogue.

23. Ensemble de freinage comprenant un ensemble selon l'une quelconque des revendications 1 à 22 et un étrier de frein (15) associé à l'interface mécanique (5) par l'intermédiaire des deuxièmes moyens de fixation (9), le dit étrier (15) étant dissocié de la structure fixe.

24. Ensemble de freinage selon la revendication 23, **caractérisé en ce qu'**il comprend en outre un disque de frein (12) associé à la bague tournante (3), inséré entre les mors (16, 17) de l'étrier (15) pour que celui-ci lui applique un effort de freinage par rapprochement des mors (16, 17).

25. Application d'ensembles selon la revendication 23 ou 24 à la mesure d'une part du couple de freinage d'un véhicule et d'autre part des efforts longitudinaux, transversaux et verticaux exercés sur une ou chacune de ses roues, dans laquelle un ensemble est associé à une ou chacune des roues, le couple étant mesuré au moyen des capteurs (38) localisés au voisinage des deuxièmes moyens de fixation (9) et/ou au voisinage des moyens d'association (7) et les efforts au moyen des capteurs (38) localisés au voisinage des premiers moyens de fixation (8).

26. Application selon la revendication 25, dans laquelle un dispositif de commande (49) recueille les mesures du couple de freinage et/ou des efforts exercés sur les roues, ce dispositif étant agencé pour réguler au moins une commande dynamique du véhicule, notamment le freinage, l'accélération, la direction, la suspension en fonction des dites mesures.

## Patentansprüche

1. Baugruppe bestehend aus :
- einem Wälzlager (1) mit einem stationären Ring (2) zur Verbindung an einer stationären Struktur, einem drehbaren Ring (3) zur Verbindung mit einem drehbaren Organ (6) und dazwischen angeordneten Wälzkörpern; und
- einer mechanischen Schnittstelle (5), die über Verbindungsmittel (7) mit dem stationären Ring (2) verbunden ist, wobei diese Schnittstelle (5) zwischen dem stationären Ring (2) des Wälzlagers (1) und der stationären Struktur angeordnet werden soll, wobei die Schnittstelle (5) aufweist:
- erste Befestigungsmittel (8) an der stationären Struktur;
- zweite Befestigungsmittel (9) einer Vorrichtung (10), die eine Kraft auf das drehbare Organ (6) ausüben soll; und
- mindestens einen elastischen Verformungsbereich (29-33), der unter der Wirkung der auf die Baugruppe ausgeübten Kräfte verformbar ist, wobei dem elastischen Verformungsbereich (29-33) funktionsmäßig mindestens ein Sensor (38) für die Messung der genannten Kräfte zugeordnet ist.

2. Baugruppe nach Anspruch 1, **dadurch gekennzeichnet, dass** die Schnittstelle (5) zwei sich radial erstreckende ebene Flächen (23, 24) aufweist, die über eine Umfangsfläche (25) miteinander verbunden sind, wobei in der Schnittstelle (5) eine Bohrung (27) mit einem etwas größeren Durchmesser als der Außendurchmesser des stationären Rings (2) vorgesehen ist.

3. Baugruppe nach Anspruch 2, **dadurch gekennzeichnet, dass** die Schnittstelle (5) erste radiale Vorsprünge (34-37) aufweist, in denen axiale Löcher (26) vorgesehen sind, um die Baugruppe durch Verschrauben an der stationären Struktur zu befestigen, wobei zwei angrenzende Vorsprünge durch einen Bereich von kleinerer axialer und/oder radialer Abmessung getrennt sind, der den elastischen Verformungsbereich (29-33) bildet, in dem der oder die Sensoren (38) angeordnet sind.

4. Baugruppe nach Anspruch 3, **dadurch gekennzeichnet, dass** die Schnittstelle (5) vier erste etwa um 90° zueinander angeordnete Vorsprünge (34-37) aufweist, die zwischen sich vier elastische Verformungsbereiche (29-31) bilden, in denen jeweils mindestens ein Sensor (38) angeordnet ist.

5. Baugruppe nach einem der Ansprüche 2 bis 4, **dadurch gekennzeichnet, dass** die Schnittstelle (5) zweite radiale Vorsprünge (43, 44) aufweist, die zweite Befestigungsmittel (9) an dem Wälzlager der Vorrichtung (10) bilden, die auf das mit dem drehbaren Ring (3) verbundene drehbare Organ (6) eine Kraft ausüben soll, wobei die Vorsprünge (43, 44) jeweils einen Basisbereich (46) et einen Endbereich (47) umfassen.

6. Baugruppe nach Anspruch 5, **dadurch gekennzeichnet, dass** die zweiten Vorsprünge (43, 44) in dem Endbereich (47) angeordnete axiale Löcher (45) für die Befestigung durch Verschrauben der Vorrichtung (10) umfassen, wobei mindestens ein Sensor (38) in oder in der Nähe des Basisbereichs (46) angeordnet ist, wobei dieser den elastischen Verformungsbereich (32, 33) bildet.

7. Baugruppe nach Anspruch 6, **dadurch gekennzeichnet, dass** auf an der Umfangsfläche (25), auf jeder Seite jedes zweiten Vorsprungs (43, 44), zwei Sensoren (38) angeordnet sind.

8. Baugruppe nach Anspruch 6 oder 7, **dadurch gekennzeichnet, dass** mindestens ein Sensor (38) an einer der ebenen Flächen (23, 24) angeordnet ist.

9. Baugruppe nach einem der Ansprüche 5 bis 8, **dadurch gekennzeichnet, dass** eine radiale Abmessung der zweiten Vorsprünge (43, 44) größer ist als eine radiale Abmessung der ersten Vorsprünge (34-37).

10. Baugruppe nach einem der Ansprüche 5 bis 9, **dadurch gekennzeichnet, dass** die Schnittstelle (5) aufweist:
- vier erste etwa um 90° zueinander angeordnete Vorsprünge (34-37), die zwischen sich drei elastische Verformungsbereiche (29-31) bilden, in denen jeweils mindestens ein Sensor (38) angeordnet ist; und
- zwei zwischen den ersten beiden angrenzenden Vorsprüngen (37, 34) angeordnete zweite Vorsprünge (43, 44), wobei jeder zweite Vorsprung (43, 44) mindestens einen Sensor (38) umfasst.

11. Baugruppe nach einem der Ansprüche 5 bis 10, **dadurch gekennzeichnet, dass** in den ersten (34-37) und/oder zweiten (43, 44) Vorsprüngen Durchbrüche (48) vorgesehen sind, wobei an den Innenflächen (54) der Durchbrüche (48) Sensoren (38) angeordnet sind.

12. Baugruppe nach einem der Ansprüche 1 bis 11, **dadurch gekennzeichnet, dass** die ersten Befestigungsmittel (8) ebenfalls Verbindungsmittel (7) der Schnittstelle (5) mit dem stationären Ring (2) des Wälzlagers (1) bilden.

13. Baugruppe nach Anspruch 12, **dadurch gekennzeichnet, dass** der stationäre Ring (2) einen Flansch (18) mit radialen Vorsprüngen aufweist, in denen axiale Löcher (22) vorgesehen sind, die denjenigen (28) der ersten Befestigungsmittel (8) gegenüberliegen, um so die Befestigung der Schnittstelle (5) durch Verschrauben an dem Wälzlager (1) zu gewährleisten.

14. Baugruppe nach einem der Ansprüche 1 bis 11, **dadurch gekennzeichnet, dass** die Verbindungsmittel (7) der Schnittstelle (5) an dem Wälzlager getrennt sind von den ersten (8) und zweiten (9) Befestigungsmitteln.

15. Baugruppe nach Anspruch 14, **dadurch gekennzeichnet, dass** der stationäre Ring (2) einen radialen Flansch (18) umfasst, wobei in dem Flansch (18) und der Schnittstelle (5) gegenüberliegende axiale Löcher (26) vorgesehen sind, um ihre Verbindung durch Verschrauben zu gewährleisten.

16. Baugruppe nach einem der Ansprüche 1 bis 15, **dadurch gekennzeichnet, dass** der oder die elastischen Verformungsbereiche (29-33) in der Nähe der ersten (8) und/oder zweiten (9) Befestigungsmittel und/oder in der Nähe der Verbindungsmittel (7) angeordnet sind.

17. Baugruppe nach Anspruch 16, **dadurch gekennzeichnet, dass** der oder die in der Nähe der ersten Befestigungsmittel (8) und/oder in der Nähe der Verbindungsmittel (7) angeordneten Sensoren (38) vorgesehen sind, um die auf die ersten Befestigungsmittel (8) ausgeübten und/oder auf den stationären Ring (2) übertragenen Kräfte sowie ihre jeweiligen Momente nach drei orthogonalen, gemeinsam ein Trieder bildenden Richtungen zu messen.

18. Baugruppe nach Anspruch 16 oder 17, **dadurch gekennzeichnet, dass** der oder die in der Nähe der zweiten Befestigungsmittel (9) angeordneten Sensoren (38) vorgesehen sind, um die auf die zweiten Befestigungsmittel (9) sowie ihre jeweiligen Momente nach drei orthogonalen, gemeinsam ein Trieder bildenden Richtungen zu messen.

19. Baugruppe nach einem der Ansprüche 1 bis 18, **dadurch gekennzeichnet, dass** die Sensoren (38) Dehnungsmesser auf Basis von piezoresistiven Elementen sind oder enthalten.

20. Baugruppe nach einem der Ansprüche 1 bis 18, **dadurch gekennzeichnet, dass** die Sensoren akustische Oberflächenwellensensoren sind oder enthalten.

21. Baugruppe nach Anspruch 1 bis 18, **dadurch gekennzeichnet, dass** die Sensoren (38) Magnetfeldsensoren sind oder enthalten.

22. Baugruppe nach einem der Anspruche 1 bis 21, **dadurch gekennzeichnet, dass** mindestens ein Sensor (38) auf einem Zwischenstück (42) angeordnet ist, das in dem elastischen Verformungsbereich (29-33) durch Einbettung, Schweißen, Kleben oder dergleichen befestigt ist.

23. Bremssystem mit einer Baugruppe nach einem der Ansprüche 1 bis 22 und einer Bremsgabel (15), die über die zweiten Befestigungsmittel (9) mit der mechanischen Schnittstelle (5) verbunden sind, wobei der Bremsbügel (15) von der stationären Struktur getrennt ist.

24. Bremssystem nach Anspruch 23, **dadurch gekennzeichnet, dass** es ferner eine mit dem drehbaren Ring (3) verbundene Bremsscheibe (12) umfasst, die zwischen den Backen (16, 17) des Bremsbügels (15) eingefügt ist, damit dieser sie durch Annähern der Backen (16, 17) mit einer Bremskraft beaufschlagt.

25. Verwendung von Systemen nach Anspruch 23 oder 24 zur Messung einerseits des Bremsmoments eines Fahrzeugs und andererseits der auf eines oder jedes seiner Räder ausgeübten Längs-, Quer- und Vertikalkräfte, bei der ein System mit einem oder jedem Rad verbunden ist, wobei der Moment anhand der Sensoren (38) gemessen wird, die in der Nähe der zweiten Befestigungsmittel (9) und/oder in der Nähe der Verbindungsmittel (7) angeordnet sind, und die Kräfte anhand der Sensoren (38), die in der Nähe der ersten Befestigungsmittel (8) angeordnet sind.

26. Verwendung nach Anspruch 25, bei der eine Steuervorrichtung (49) die Messungen des Bremsmoments und/oder der auf die Räder ausgeübten Kräfte erfasst, wobei diese Vorrichtung vorgesehen ist, um mindestens eine hydraulische Steuerung des Fahrzeugs, insbesondere die Bremsung, die Beschleunigung, die Lenkung, die Aufhängung, entsprechend den Messungen zu regeln.

## Claims

1. An assembly comprising:
- a bearing (1) of the type comprising a fixed race (2) intended to be associated with a fixed structure, a rotating race (3) intended to be associated with a rotating member (6), and rolling bodies between them; and
- a mechanical interface (5) associated with the said fixed race (2) by means of association means (7), this interface (5) being intended to be interposed between the fixed race (2) of the bearing (1) and the fixed structure, the said interface (5) comprising:
- first fixing means (8) to the fixed structure;
- second fixing means (9) of a device (10) intended to apply a force to the rotating member (6); and
- at least one elastic deformation zone (29-33) able to be deformed under the action of forces exerted on the said assembly, at least one sensor (38) able to measure the said forces being functionally associated with the said elastic deformation zone (29-33).

2. An assembly according to Claim 1, **characterised in that** the interface (5) comprises two planar faces (23, 24) extending radially and connected together by a circumferential face (25), a bore (27) with a diameter substantially greater than the outside diameter of the fixed race (2) being formed in the said interface (5).

3. An assembly according to Claim 2, **characterised in that** the said interface (5) comprises first radial projections (34-37) in which axial holes (26) are formed for fixing the assembly by screwing to the fixed structure, two adjacent projections being separated by a zone of lesser axial and/or radial dimension forming an elastic deformation zone (29-33), on which the sensor or sensors (38) are disposed.

4. An assembly according to Claim 3, **characterised in that** the said interface (5) comprises four first projections (34-37) disposed substantially at 90° to one another, defining between them four elastic deformations zones (29-31) on each of which at least one sensor (38) is disposed.

5. An assembly according to one of Claims 2 to 4, **characterised in that** the interface (5) comprises second radial projections (43, 44) forming second fixing means (9) to the bearing of the device (10) intended to apply a force to the rotating member (6) associated with the rotating race (3), the projections (43, 44) each comprising a base zone (46) and an end zone (47).

6. An assembly according to Claim 5, **characterised in that** the said second projections (43, 44) comprise axial holes (45) for fixing the device (10) by screwing, located in the end zone (47), at least one sensor (38) being disposed on or in the vicinity of the base zone (46), the latter forming an elastic deformation zone (32, 33).

7. An assembly according to Claim 6, **characterised in that** two sensors (38) are disposed on the circumferential face (25), on each side of each second projection (43, 44).

8. An assembly according to Claim 6 or 7, **characterised in that** at least one sensor (38) is disposed on one of the planar faces (23, 24).

9. An assembly according to one of Claims 5 to 8, **characterised in that** a radial dimension of the second projections (43, 44) is greater than a radial dimension of the first projections (34-37).

10. An assembly according to one of Claims 5 to 9, **characterised in that** the interface (5) comprises:
- four first projections (34-37) disposed substantially at 90° with respect to one another, defining between them three elastic deformation zones (29-31) on each of which at least one sensor (38) is disposed; and
- two second projections (43, 44) located between two adjacent first projections (37, 34), each second projection (43, 44) being provided with at least one sensor (38).

11. An assembly according to one of Claims 5 to 10, **characterised in that** openings (48) are formed in the first (34-37) and/or second (43, 44) projections, sensors (38) being disposed on the internal faces (54) of the openings (48).

12. An assembly according to any one of Claims 1 to 11, **characterised in that** the first fixing means (8) also form association means (7) of the interface (5) with the fixed race (2) of the bearing (1).

13. An assembly according to Claim 12, **characterised in that** the fixed race (2) comprises a flange (18) comprising radial projections in which there are formed axial holes (22) disposed opposite those (28) of the first fixing means (8) so as to provide the fixing of the interface (5) by screwing onto the bearing (1).

14. An assembly according to any one of Claims 1 to 11, **characterised in that** the association means (7) of the interface (5) on the bearing are distinct from the first (8) and second (9) fixing means.

15. An assembly according to Claim 14, **characterised in that** the fixed race (2) comprises a radial flange (18), axial holes (26) being formed opposite the said flange (18) and in the interface (5) so as to provide their association by screwing.

16. An assembly according to one of Claims 1 to 15, **characterised in that** the elastic deformation zone or zones (29-33) are located in the vicinity of the first (8) and/or second (9) fixing means and/or in the vicinity of the association means (7).

17. An assembly according to Claim 16, **characterised in that** the sensor or sensors (38) located in the vicinity of the first fixing means (8) and/or in the vicinity of the association means (7) are arranged so as to measure the forces applied to the first fixing means (8) and/or transmitted to the fixed race (2), as well as their respective moments, in three orthogonal directions forming together a trihedron.

18. An assembly according to Claim 16 or 17, **characterised in that** the sensor or sensors (38) located in the vicinity of the second fixing means (9) are arranged so as to measure the forces applied to the second fixing means (9), and their respective moments, in three orthogonal directions forming together a trihedron.

19. An assembly according to one of Claims 1 to 18, **characterised in that** the sensors (38) are or comprise strain gauges based on piezoresistive elements.

20. An assembly according to one of Claims 1 to 18, **characterised in that** the sensors (38) are or comprise surface acoustic wave sensors.

21. An assembly according to Claims 1 to 18, **characterised in that** the sensors (38) are or comprise magnetic field sensors.

22. An assembly according to one of Claims 1 to 21, **characterised in that** at least one sensor (38) is disposed on an intermediate piece (42) fixed to an elastic deformation zone (29-33) by embedding, welding, adhesive bonding or the like.

23. A braking assembly comprising an assembly according to any one of Claims 1 to 22 and a brake calliper (15) associated with the mechanical interface (5) by means of the second fixing means (9), the said calliper (15) being dissociated from the fixed structure.

24. A braking assembly according to Claim 23, **characterised in that** it also comprises a brake disc (12) associated with the rotating race (3), inserted between the jaws (16, 17) of the calliper (15) so that the latter applies a braking force to it by the jaws (16, 17) being brought closer together.

25. Application of assemblies according to Claim 23 or 24 to the measurement on the one hand of the braking torque of a vehicle and on the other hand the longitudinal, transverse and vertical forces exerted on one or each of its wheels, in which an assembly is associated with one or each of the wheels, the torque being measured by means of the sensors (38) located in the vicinity of the second fixing means (9) and/or in the vicinity of the association means (7) and the forces by means of the sensors (38) located in the vicinity of the first fixing means (8).

26. Application according to Claim 25, in which a control device (49) collects the measurements of the braking torque and/or of the forces exerted on the wheels, this device being arranged so as to regulate at least one dynamic control of the vehicle, in particular the braking, acceleration, steering or suspension, according to the said measurements.
